# EUROPEAN PATENT SPECIFICATION

(11) **EP 2 692 220 B1**
(45) Date of publication and mention of the grant of the patent: **27.04.2016**
(21) Application number: 12179143.8
(22) Date of filing: 03.08.2012
(51) Int. Cl.: A01D 34/00, A47L 9/00, G01D 5/14, A47L 9/28, B60L 3/00, B60L 1/00, B60L 11/18, B60L 15/20

(54) **Directional obstruction sensor**
Richtungsblockierungssensor
Capteur d'obstruction directionnelle

(43) Date of publication of application: 05.02.2014
(73) Proprietor: Robert Bosch GmbH, 70442 Stuttgart (DE)
(72) Inventor: Johnson, William A., Ipswich Suffolk IP6 8JJ (GB); Coussins, Adrian, Stowmarket,UK- IP14 1TT Suffolk (GB)

(56) References cited:
- EP-A2- 0 270 322
- WO-A1-01/06905
- WO-A1-02/071175
- WO-A1-03/103375
- DE-A1- 10 242 257

## Description

The present invention relates to a directional obstruction detector, especially for a robotic apparatus.

Self-guided, autonomous or robotic household apparatus such as lawnmowers or vacuum cleaners are well known. Current garden robotic lawn mowers generally have a substantial peripheral bumper or a complete shell covering the whole mower, elastically-mounted to a chassis, in which are mounted a motor and cutter components. When contact with an external object occurs, the bumper or shell becomes momentarily stationary but the mower itself continues to move and the resultant travel between the mower and the shell triggers a conventional electrical switch. A disadvantage of this technique is that there is no indication of the direction of obstacle relative to the direction of travel of the robotic apparatus.

The current invention seeks to improve on existing arrangements for obstacle detection by providing a method of detecting the direction of the obstructing article. The Hall effect, wherein the drift of electrons across a conductor in the presence of a magnetic field causes a potential difference perpendicular to the direction of the current, is commonly used in sensors which are used for proximity switching, positioning, speed detection, magnetic field measurement and current sensing applications.

The use of Hall Effect sensors for detection of relative movement between parts of an apparatus is known. In WO2003/103375 a system for the detection of collisions in a robot lawn mower by detecting the motion of its outer shell is disclosed. A pillar or "joystick" flexibly connected to the outer shell and based in a socket arrangement in the main body of the device is provided. Any movement by the pillar in response to a collision is detected by means of a single Hall Effect sensor located in the main body, whose Hall voltage varies as distance from a magnet in the pillar varies. This arrangement allows detection of collisions, but does not provide information about the direction of obstacle causing the motion of the outer shell, unless more than one joystick is used. For this purpose, an arrangement using multiple Hall Effect sensors is required.

Such an arrangement is disclosed in EP0270322. Here, motion in either four or six degrees of freedom, namely linear motion in two or three dimensions and rotational motion in two or three mutually perpendicular planes is possible due to two or three mutually perpendicular arrangements of a magnet and a Hall Effect sensor. This mechanism however does not adapt well to a robotic lawn mower, particularly one with a "joystick" type structure linking the outer shell to the main body, as the location of the Hall Effect sensors would restrict the range of motion of the joystick.

For example WO01/06905 discloses a robotic device in which navigation sensors are located around the perimeter of the device. Like EP0270322 however, this arrangement does not adapt to a joystick arrangement.

It would be advantageous therefore to be able to have an arrangement which provides for a "joystick" system with multiple Hall Effect sensors so as to locate the direction of an obstruction, without the need to have multiple joysticks. This information may be then used to provide a more intelligent navigational response to an obstacle than that which occurs with conventional obstacle avoidance methods.

Accordingly, in its broadest sense, the present invention provides a device for detecting relative motion in a two dimensional plane between a first element and a second element of a robotic apparatus, the motion resulting from an external contact force transmitted to the first element, the device comprising a plurality of Hall effect sensors and at least one magnet, the Hall Effect sensors being located on a first of the first element or the second element, the magnet being located on a second of the first element or the second element, wherein a locus of points through which either the Hall effect sensors or magnet may in use pass defines a generally spherical segment and the second element is spaced from the spherical segment.

Preferably the magnet comprises an annular magnet coupled to the first section and at least three Hall effect sensors coupled to the second section, the annular magnet having a first pole and a second pole wherein an inner surface of the annular magnet provides the first pole and an outer surface of the annular magnet provides the second pole.

Preferably the Hall effect sensors are located substantially in a plane substantially parallel and adjacent to a plane perpendicular to an axis of the annular magnet.

Preferably the device comprises at least four Hall effect sensors, more preferably four Hall effect sensors.

Preferably the first and second elements have a rest position relative to each other the rest position resulting from an absence of external contact force causing relative motion between the first element and second element, the device further comprising biasing means, the biasing means connecting the first element and the second element in an arrangement such that when an external contact force causes movement away from the rest position, the biasing means will urge the sections into the rest position.

Preferably the biasing means comprises a plurality of springs.

Preferably the biasing means is preloaded, such as to impede relative movement of the first element and second element if the external contact force is less than a required threshold.

Preferably the magnet is a permanent magnet.

Optionally, the magnet is an electromagnet.

The present invention also provides a robotic apparatus comprising a detection device described above.

Preferably the robotic apparatus comprises a joystick, the joystick comprising a pillar flexibly connected at a proximal end to the first element of the robotic apparatus and flexibly connected at a distal end to the second element of the robotic apparatus by means of a seat and socket.

Preferably the robotic apparatus contains no more than one joystick.

Suitably the robotic apparatus is a robotic lawn mower.

The above and other aspects of the invention will now be described in further detail, by way of example only, with reference to the accompanying drawings in which:
Figure 1 is perspective view of a robotic lawn mower comprising an obstacle detection apparatus according to the invention;
Figure 2 illustrates a "joystick" type connection arrangement between the outer shell and main body of a robotic apparatus, with a detection mechanism according to the invention;
Figure 3 illustrates the effect of a collision on the arrangement of Figure 2;
Figure 4 shows an annular magnet of the type used in an embodiment of the invention;
Figure 5 shows an annular magnet of a type used in an alternative embodiment of the invention;
Figure 6 is a plan view of a magnetic ring and sensor arrangement, according to an embodiment of the invention, with the magnet in its central default position;
Figure 7 is a plan view of a magnetic ring and sensor arrangement according to an embodiment of the invention, with the magnet displaced from its central position;
Figure 8 is a side view of the arrangement of Figure 6;
Figure 9 is a side view of the arrangement of Figure 7;
Figure 10 illustrates the outputs of the Hall Effect sensors in the arrangement of Figure 4, in response to an encounter with an obstacle;
Figure 11 illustrates the outputs of the Hall Effect sensors in the arrangement of Figure 4, in response to an encounter with an obstacle in a different direction;
Figure 12 is a cross-sectional view of the self-centering "joystick" according to an embodiment of the invention;
Figure 13 is a graph showing displacement against applied force for a preloaded spring;
Figure 14 is a cut-away view of a sensor, magnet and joystick arrangement according to the invention;
Figure 15 is a cross-sectional view of the arrangement of Figure 14.

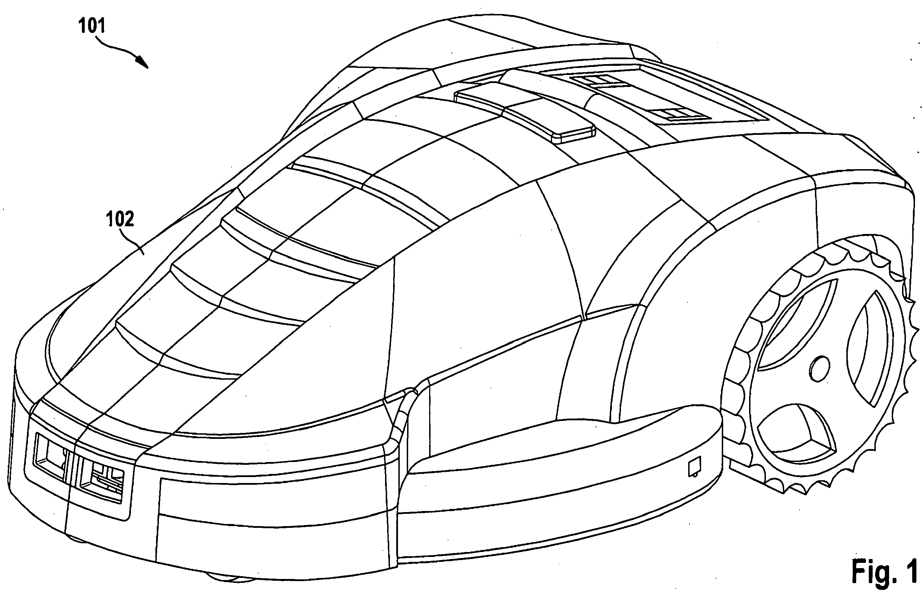

Figure 1 illustrates a robotic lawnmower 101, which is a typical appliance for which the invention is designed. It comprises a main body of the appliance, which comprises the control electronics, motor, batteries and other components of the device, and the outer shell 102. The outer shell 102 acts as a protection for the appliance, both from physical damage and from the environment. It also acts as part of a mechanism for detecting collisions and moving around obstacles. In normal use, a robotic device such as a lawnmower will encounter obstacles. When contact with an external object occurs, the bumper or shell becomes momentarily stationary but the mower itself continues to move and the resultant travel between the mower and the shell triggers a conventional electrical switch. Once this has occurred, power to the mower driver is removed, but there may be a further small movement before coming to rest.

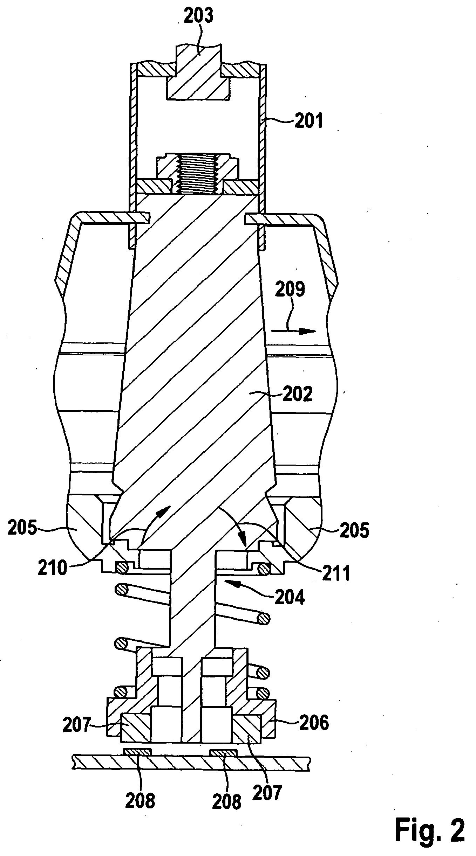

Figure 2 illustrates a "joystick" type connection mechanism for a robotic lawn mower, with a collision detection mechanism according to the invention. The outer shell is connected to the main body by means of a "joystick" 201, which has a connector 202, which is flexibly connected to the outer shell, a main pillar 203, which is inserted through an aperture 204 in a section the main body 205, and a sensor element containing section 206. In the preferred embodiment, the sensor element containing section 206 contains the magnet 207, although in an alternative embodiment, this section may contain the Hall sensors. In the preferred embodiment, Hall sensors 208 are located below the sensor element containing section 206. This arrangement means that no electrical wiring is required to the outer shell or the joystick. In the alternative embodiment, the magnet or magnets are located here.

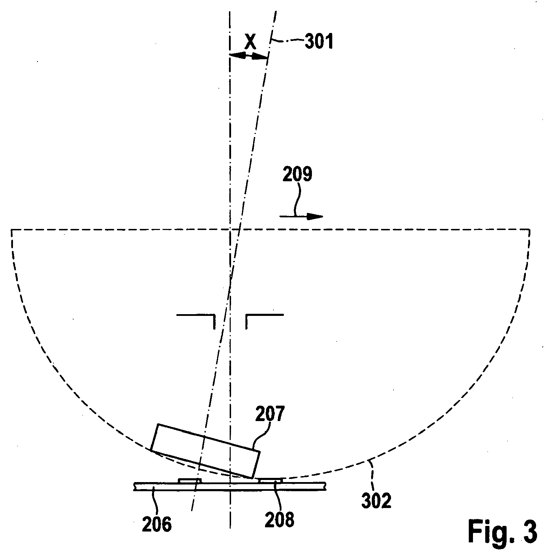

If the outer shell moves in the direction 209, then the joystick will be lifted in the direction 210 and will be turned about a point 211 on the diameter of seat section 212 of pillar 203. The effect of this motion can be seen in Figure 3. Figure 3 is a diagrammatic view of the motion of the magnet 207 and axis 301 of the pillar of the joystick. The locus of all the points through which magnet 207 travels forms substantially a spherical segment contained within boundary 302, which is defined to extend over the Hall Effect sensors. The Hall effect sensors are located such that they are spaced from this spherical segment. The Hall effect sensors are thus arranged such that they do not obstruct the movement of the magnet. Clearly in the embodiment with magnet in the main body of the device and the Hall Effect sensors in the joystick, then the spherical segment will be defined by the movement of the sensors and the magnet will be spaced from the spherical segment.

The location of the magnets outside of the spherical segment of movement of the magnets gives an advantage over the prior art in that it allows for a greater range of motion for a given size of device and allows a greater range of voltage for detection as the Hall sensors may move across the whole of a magnet from one pole to the other and hence across the maximum range of magnetic field difference.

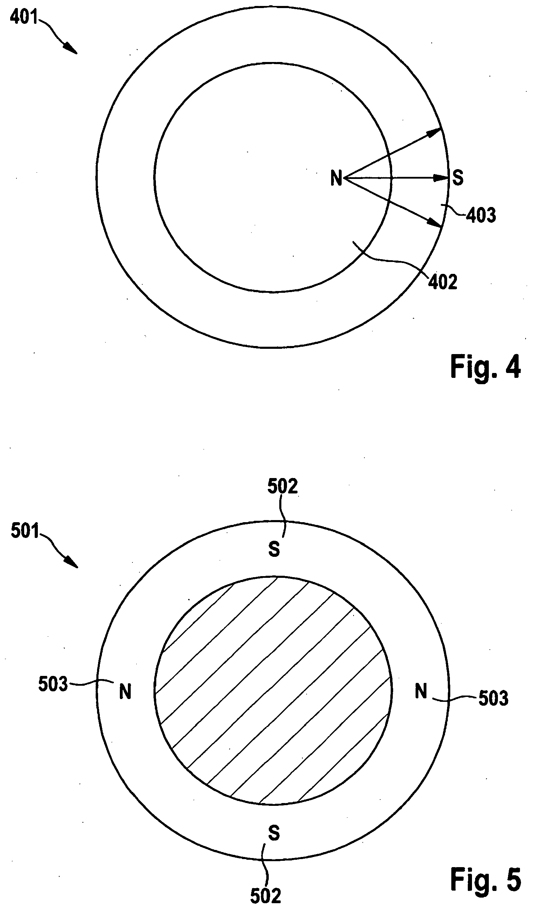

Figure 4 shows an annular magnet 401 as used in an embodiment of the invention. In this embodiment, the north pole 402 of the annular magnet is located on the inner side of annulus and the south pole 403 on the outer edge. It would be clear to the person skilled in the art that the polarity of the magnet could be reversed without affecting the operation of the invention.

Figure 5 shows an alternative to this arrangement in which there is provided an annular magnet 501 with multiple south poles 502 and multiple north poles 503 arranged circumferentially around the ring. The person skilled in the art will also appreciate that an arrangement of suitable bar magnets or electromagnets would perform the same task and hence the invention is not limited to any one arrangement or type of magnet. The preferred embodiment is that of Figure 4, as this gives the simplest detection arrangements.

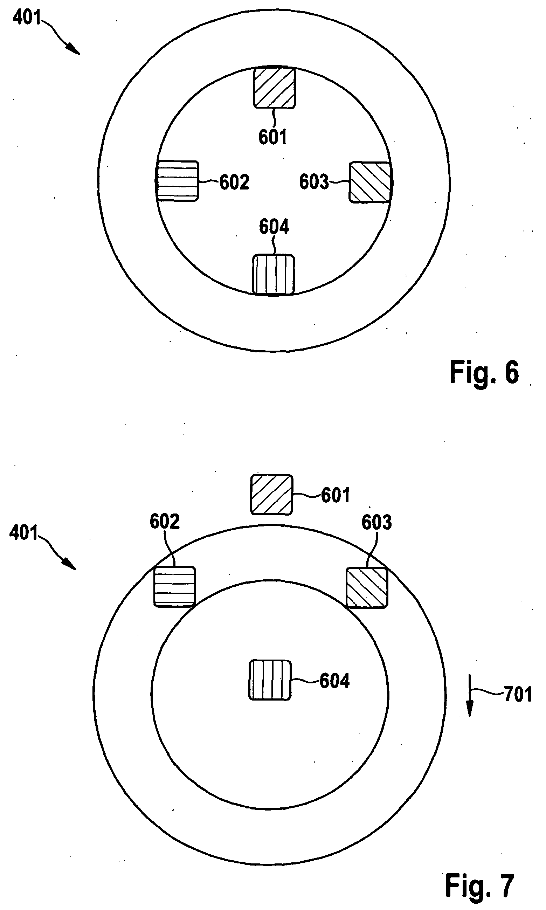

Figure 6 shows a plan view of an arrangement of a ring magnet 401 and Hall effect sensors 601, 602, 603, 604 according to the invention. The Hall effect sensors may be located above or below the magnet and may move relative to the magnet if the outer shell moves relative to the main section of the robotic apparatus. In this embodiment, four Hall effect sensors are used, but the person skilled in the art will appreciate that directional detection could be achieved with fewer Hall effect sensors. Three Hall Effect sensors could be used in combination with an annular magnet such as that illustrated in Figure 4. Directional detection with just two Hall Effect sensors is possible with an appropriate arrangement of magnets. Clearly more than four Hall sensors is also possible.

The view in Figure 6 shows the arrangement with no contact against the shell of the robotic apparatus, with the sensors consequently located in their default positions. Figure 7 illustrates the effect of a collision and the movement in direction 701 of the magnet relative to the Hall effect sensors 601, 602, 603, 604.

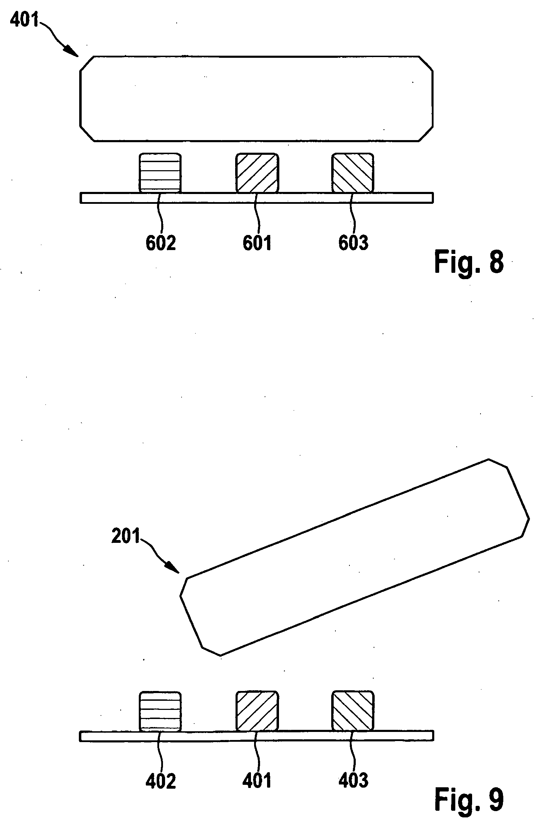

Figure 8 shows a side view of the arrangement in Figure 6, illustrating the location of the sensors beneath the permanent annular magnet when the joystick is in its central position. Figure 9 shows a side view of the effect of the movement illustrated in Figure 7. The position of the outer shell of the apparatus relative to the main body is detected by the relative readings of the sensors.

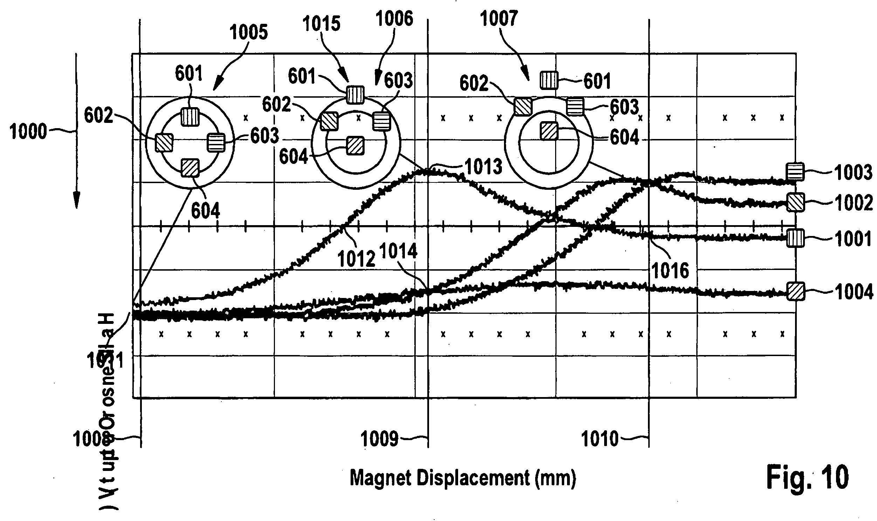

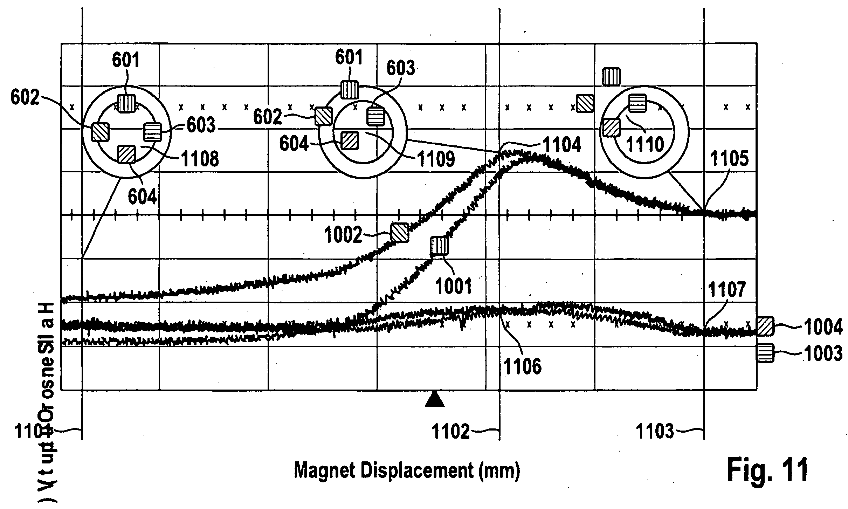

The operation of the collision detection mechanism will now be explained with reference to Figures 10 and 11. Figure 8 shows the arrangement of sensors and the sensor outputs when a collision causes a movement of the outer shell in the direction 1000. Four voltage plots are shown 1001, 1002, 1003, 1004, which correspond to Hall Effect sensors 601, 602, 603, 604. Three positions of the magnet 401 are shown 1005, 1006, 1007, which correspond to different distances moved by the outer shell of the robotic apparatus. Three positions on the plots, 1008, 1009 and 1010 correspond to magnet positions 1005, 1006, 1007.

In the initial position 1005, the sensors are located in their default position, i.e. where no contact is made against any part of the outer shell. In this position the sensors are located radially symmetrically around the annular magnet, positioned just inside the annulus. In this position, the proximity of the north pole of the magnet induces a negative Hall voltage 1011 across the sensors. The radial symmetry ensures that the readings from each of the sensors is substantially the same. A second position 1006 is shown. Here contact has been made against the outer shell of the robotic apparatus and the shell has consequently been moved in direction 1000. To simplify the explanation of the process, movement will be described in terms of the Hall sensors' movement relative to the magnet. Hall sensor 601 moves across the magnetic ring, such that the polarity of the magnetic field it "sees" is reversed. As a consequence, as the movement takes place, its Hall voltage initially goes to zero 1012 and then increases to a positive value 1013 as the sensor moves to the other side of the magnetic ring 401. Small reductions in the magnitudes of the voltages 1014 in the other sensors occur as they move away from the positions of peak magnetic field, which occur just inside and just outside of the magnetic ring. The position of sensor 601 is at its maximum positive voltage 1015, as it is positioned just outside of the annulus. As Hall effect sensor 601 travels further, its positive Hall voltage decreases again, as shown in position 1007. At position 1007, the sensors have moved further from their central positions. Hall sensors 602, 603 are positioned substantially over the edge of the outer rim of the annulus at maximum magnetic field strength from the south pole of the magnet, thus producing their highest positive Hall voltage. Sensor 601 has reached a point where the magnetic field is much reduced and hence its Hall voltage is substantially zero 1016.

Figure 11 illustrates the effect of a movement of the magnet in a direction where the vector of the motion is in between two Hall sensors. In this instance, the direction of the movement of the magnet is 1100. Three positions of this motion are shown, 1101, 1102 and 1103. Position 1101 is before any collision has occurred, with the Hall sensors in their default positions relative to the magnet and hence the Hall voltage readings are the same as in position 1005 in Figure 10. In position 1102, the magnet has moved such that sensors 601 and 602 have both crossed over to the other side of annular magnet 401. The consequence of this is that the Hall voltages or both of these sensors changes in the same way as that of 601 changed in moving from position 1005 to 1006 in Figure 10, i.e. to a maximum positive value 1104. Further movement of the magnet to position 1103 causes the Hall voltage in sensors 601, 602 to reduce to substantially zero 1105. A small reduction 1106 and then increase 1107 in Hall voltage in sensors 603 and 604 will occur as they move away from a position of maximum magnetic field strength at one side of the inner ring 1108 of the annular magnet, into the centre of the ring 1109 and then to a second position of maximum magnetic strength 1110. The direction of the movement of the magnet can thus be deduced by the changes in the values of the Hall voltages in the Hall effect sensors.

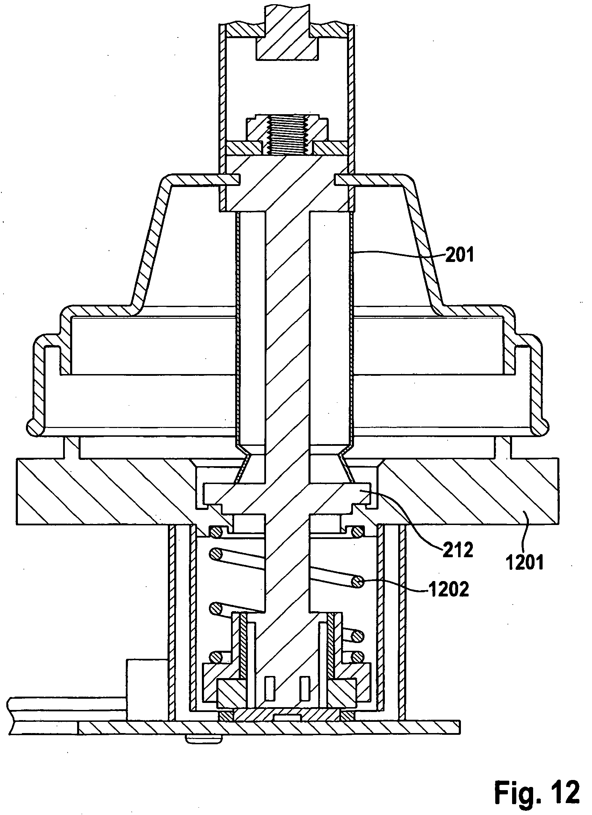

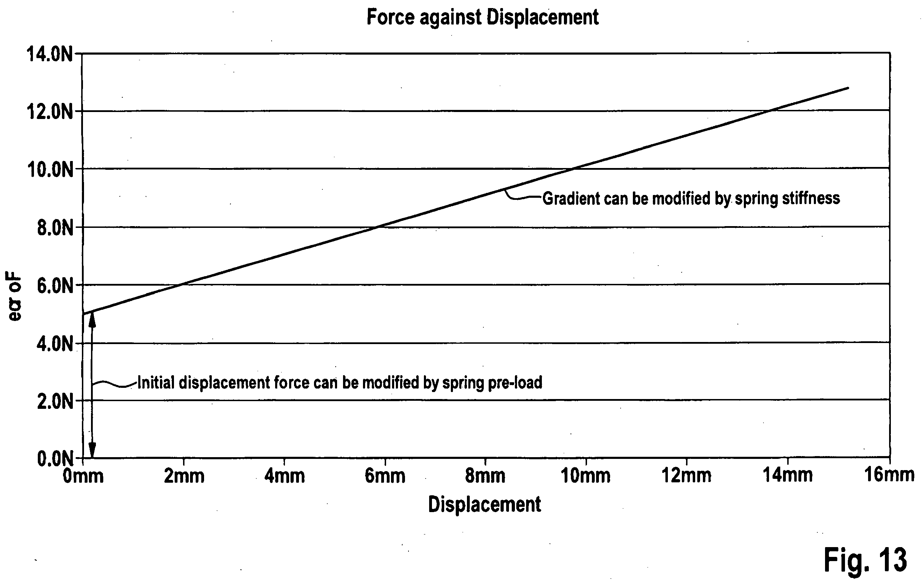

Once an external force on the outer shell has been removed, it will be necessary to return the magnet to its central position. A further requirement is that vibration of the robotic apparatus in operation should not cause as far as possible noise on the sensor outputs. To achieve both these objectives, a preloaded spring arrangement is provided that provides a self-centering mechanism for the magnet and a damping mechanism against vibration. A self-centering mechanism according to an embodiment of the invention is shown in Figure 12, in which seat section 212 of joystick 201 is located in a socket 1201, and a preloaded spring 1202 is provided to damp movement of joystick 201 and to centre it after an external force has been applied to the outer shell of the robotic device. The seat arrangement and the preloading of the springs limit movement of the joystick unless a force greater than a required threshold is applied to the exterior of the robotic apparatus. This helps prevent noise in the Hall effect sensor readings caused by the vibrations of the robotic apparatus motor, by the apparatus moving over rough ground etc. The springs also provide a self-centering mechanism to overcome such problems as the distortion, deformation or deterioration of the mountings, typically made of rubber, of the outer shell. The threshold force may be varied by modifying the preload on the springs and the degree of damping and the strength of the self-centering mechanism can be modified by changing the stiffness of the spring. Both of these effects are illustrated in Figure 13.

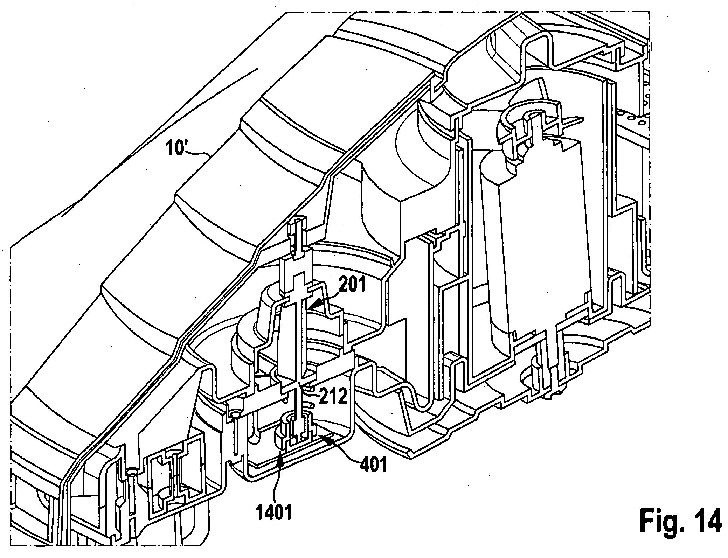

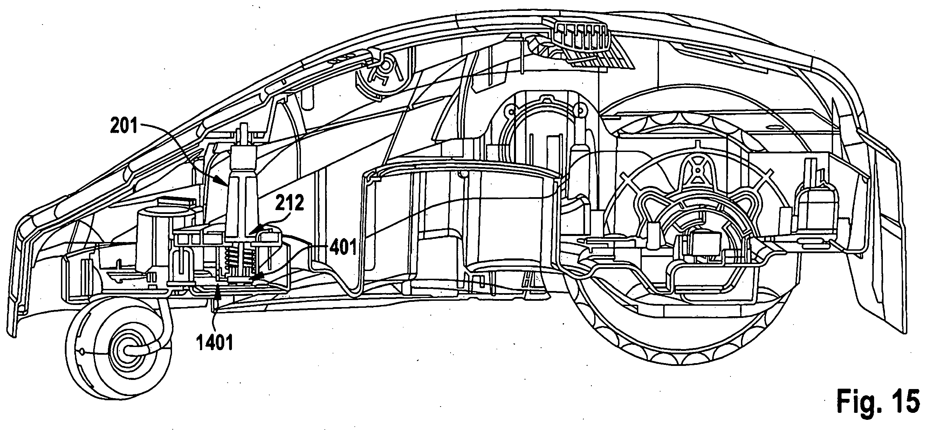

The positioning of the "joystick" arrangement within a typical robotic device are shown in Figures 14 and 15. Figure 14 is a cut-away view of the interior of the robotic device, showing outer shell 101, joystick 201, seat arrangement 212, ring magnet 401 and Hall effect sensor PCB 1401. Figure 15 is a cross-section of the device, showing a different view of the same components.

## Claims

1. A relative motion detecting device for detecting relative motion in a two dimensional plane between a first element and a second element of a robotic apparatus (101), said motion resulting from an external contact force transmitted to said first element, said device comprising a plurality of Hall effect sensors (208) and at least one magnet (207), said Hall Effect sensors (208) being located on a first of said first element or said second element, said magnet (207) being located on a second of said first element or said second element, **characterised in that** a locus of points (302) through which a first of said magnet (207) or said Hall effect sensors (208) may in use pass defines a generally spherical segment and a second of said magnet (207) or said Hall effect sensors (208) are spaced from said spherical segment.

2. A relative motion detecting device as claimed in claim 1, said magnet comprising an annular magnet (401) coupled to said first section and at least three Hall effect sensors (601, 602, 603, 604) coupled to said second section, said annular magnet having a first pole (501, 502) and a second pole (501, 502) wherein an inner surface of said annular magnet provides said first pole (501, 502) and an outer surface of said annular magnet provides said second pole (501, 502).

3. A relative motion detecting device as claimed in claim 2 wherein said Hall effect sensors (601, 602, 603, 604) are located substantially in a plane substantially parallel and adjacent to a plane perpendicular to an axis of said annular magnet (401).

4. A relative motion detecting device as claimed in any of claims 1 to 3, comprising at least four Hall effect sensors, preferably four Hall effect sensors (601, 602, 603, 604).

5. A relative motion detecting device as claimed in any preceding claim, wherein said first element and second element have a rest position relative to each other, said rest position resulting from an absence of external contact force (209) causing relative motion between said first element and second element, said device further comprising biasing means (1202), said biasing means connecting said first section and said second element in an arrangement such that when an external contact force causes movement away from said rest position, said biasing means will urge said elements into the rest position.

6. A relative motion detecting device as claimed in claim 5 wherein said biasing means comprises a plurality of springs (1202).

7. A relative motion detecting device as claimed in claim 5 or claim 6 wherein said biasing means (1202) is preloaded, such as to impede relative movement of said first element and second element if said external contact force is less than a required threshold.

8. A relative motion detecting device as claimed in any preceding claim wherein said magnet (401) is a permanent magnet.

9. A relative motion detecting device as claimed in any preceding claim wherein said magnet (401) is an electromagnet.

10. A robotic apparatus comprising a relative motion detecting device as claimed in any previous claim.

11. A robotic apparatus as claimed in claim 10, comprising a joystick (201) defining said first element, said joystick comprising a pillar (203) flexibly connected at a proximal end to said first element of said robotic apparatus and flexibly connected at a distal end to said second element of said robotic apparatus by means of a seat and socket (212).

12. A robotic apparatus as claimed in claim 11, containing no more than one joystick (201).

13. A robotic apparatus as claimed in claim 10 wherein said robotic device is a robotic lawn mower.

## Patentansprüche

1. Relativbewegungsdetektierungseinrichtung zum Detektieren einer Relativbewegung in einer zweidimensionalen Ebene zwischen einem ersten Element und einem zweiten Element einer Robotervorrichtung (101), wobei die Bewegung aus einer auf das erste Element übertragenen externen Kontaktkraft resultiert, wobei die Einrichtung mehrere Hall-Effekt-Sensoren (208) und mindestens einen Magneten (207) umfasst, wobei sich die Hall-Effekt-Sensoren (208) an einem ersten des ersten Elements oder des zweiten Elements befinden, wobei sich der Magnet (207) an einem zweiten des ersten Elements oder des zweiten Elements befindet, **dadurch gekennzeichnet, dass** ein Ort von Punkten (302), durch den ein erster des Magneten (207) oder der Hall-Effekt-Sensoren (208) bei Verwendung hindurchgehen, ein allgemein sphärisches Segment definiert und ein zweiter des Magneten (207) oder der Hall-Effekt-Sensoren (208) von dem sphärischen Segment beabstandet sind.

2. Relativbewegungsdetektierungseinrichtung nach Anspruch 1, wobei der Magnet einen ringförmigen Magneten (401) umfasst, an die erste Sektion gekoppelt, und mindestens drei Hall-Effekt-Sensoren (601, 602, 603, 604), an die zweite Sektion gekoppelt, wobei der ringförmige Magnet einen ersten Pol (501, 502) und einen zweiten Pol (501, 502) aufweist, wobei eine innere Oberfläche des ringförmigen Magneten den ersten Pol (501, 502) und eine äußere Oberfläche des ringförmigen Magneten den zweiten Pol (501, 502) bereitstellt.

3. Relativbewegungsdetektierungseinrichtung nach Anspruch 2, wobei sich die Hall-Effekt-Sensoren (601, 602, 603, 604) im Wesentlichen in einer Ebene im Wesentlichen parallel und bei einer Ebene senkrecht zu einer Achse des ringförmigen Magneten (401) befinden.

4. Relativbewegungsdetektierungseinrichtung nach einem der Ansprüche 1 bis 3, umfassend mindestens vier Hall-Effekt-Sensoren, bevorzugt vier Hall-Effekt-Sensoren (601, 602, 603, 604).

5. Relativbewegungsdetektierungseinrichtung nach einem vorhergehenden Anspruch, wobei das erste Element und das zweite Element relativ zueinander eine Ruheposition aufweisen, wobei die Ruheposition aus einer Abwesenheit einer externen Kontaktkraft (209) resultiert, die eine Relativbewegung zwischen dem ersten Element und dem zweiten Element bewirkt, wobei die Einrichtung weiterhin ein Vorspannungsmittel (1202) umfasst, wobei das Vorspannungsmittel die erste Sektion und das zweite Element in einer Anordnung derart verbindet, dass, wenn eine externe Kontaktkraft eine Bewegung weg von der Ruheposition bewirkt, das Vorspannungsmittel die Elemente in die Ruheposition drücken wird.

6. Relativbewegungsdetektierungseinrichtung nach Anspruch 5, wobei das Vorspannungsmittel mehrere Federn (1202) umfasst.

7. Relativbewegungsdetektierungseinrichtung nach Anspruch 5 oder 6, wobei das Vorspannungsmittel (1202) vorgespannt ist, um eine Relativbewegung des ersten Elements und des zweiten Elements zu behindern, falls die externe Kontaktkraft kleiner ist als ein erforderlicher Schwellwert.

8. Relativbewegungsdetektierungseinrichtung nach einem vorhergehenden Anspruch, wobei der Magnet (401) ein Permanentmagnet ist.

9. Relativbewegungsdetektierungseinrichtung nach einem vorhergehenden Anspruch, wobei der Magnet (401) ein Elektromagnet ist.

10. Robotervorrichtung, umfassend eine Relativbewegungsdetektierungseinrichtung nach einem vorhergehenden Anspruch.

11. Robotervorrichtung nach Anspruch 10, umfassend einen Joystick (201), der das erste Element definiert, wobei der Joystick eine Säule (203) umfasst, die an einem proximalen Ende flexibel mit dem ersten Element der Robotervorrichtung verbunden ist und an einem distalen Ende flexibel mit dem zweiten Element der Robotervorrichtung mit Hilfe eines Sitzes-und-Pfanne (212) verbunden ist.

12. Robotervorrichtung nach Anspruch 11, nicht mehr als einen Joystick (201) enthaltend.

13. Robotervorrichtung nach Anspruch 10, wobei die Robotereinrichtung ein Rasenmäherroboter ist.

## Revendications

1. Dispositif de détection de mouvement relatif destiné à détecter un mouvement relatif dans un plan bidimensionnel entre un premier élément et un second élément d'un appareil robotisé (101), ledit mouvement résultant d'une force de contact externe transmise audit premier élément, ledit dispositif comprenant une pluralité de capteurs à effet Hall (208) et au moins un aimant (207), lesdits capteurs à effet Hall (208) étant situés sur un premier dudit premier élément ou dudit second élément, ledit aimant (207) étant situé sur un second dudit premier élément ou dudit second élément, **caractérisé en ce qu'**un lieu de points (302) par lesquels peut passer un premier dudit aimant (207) ou desdits capteurs à effet Hall (208) lors de l'utilisation définit un segment globalement sphérique et un second dudit aimant (207) et desdits capteurs à effet Hall (208) est espacé dudit segment sphérique.

2. Dispositif de détection de mouvement relatif selon la revendication 1, ledit aimant comprenant un aimant annulaire (401) couplé à ladite première section et au moins trois capteurs à effet Hall (601, 602, 603, 604) copulés à ladite seconde section, ledit aimant annulaire ayant un premier pôle (501, 502) et un second pôle (501, 502), dans lequel une surface interne dudit aimant annulaire fournit ledit premier pôle (501, 502) et une surface externe dudit aimant annulaire fournit ledit second pôle (501, 502).

3. Dispositif de détection de mouvement relatif selon la revendication 2, dans lequel lesdits capteurs à effet Hall (601, 602, 603, 604) sont sensiblement situés dans un plan sensiblement parallèle et adjacent à un plan perpendiculaire à un axe dudit aimant annulaire (401).

4. Dispositif de détection de mouvement relatif selon l'une quelconque des revendications 1 à 3, comprenant au moins quatre capteurs à effet Hall, de préférence quatre capteurs à effet Hall (601, 602, 603, 604).

5. Dispositif de détection de mouvement relatif selon l'une quelconque des revendications précédentes, dans lequel ledit premier élément et ledit second élément ont une position de repos l'un par rapport à l'autre, ladite position de repos résultant d'une absence de force de contact externe (209) provoquant un mouvement relatif entre ledit premier élément et ledit second élément, ledit dispositif comprenant en outre un moyen de sollicitation (1202), ledit moyen de sollicitation reliant ladite première section audit second élément dans une configuration telle que lorsqu'une force de contact externe provoque un mouvement d'écartement par rapport à ladite position de repos, ledit moyen de sollicitation sollicite lesdits éléments vers la position de repos.

6. Dispositif de détection de mouvement relatif selon la revendication 5, dans lequel ledit moyen de sollicitation comprend une pluralité de ressorts (1202).

7. Dispositif de détection de mouvement relatif selon la revendication 5 ou la revendication 6, dans lequel ledit moyen de sollicitation (1202) est préchargé de manière à empêcher un mouvement relatif dudit premier élément et dudit second élément si ladite force de contact externe est inférieure à un seuil requis.

8. Dispositif de détection de mouvement relatif selon l'une quelconque des revendications précédentes, dans lequel ledit aimant (401) est un aimant permanent.

9. Dispositif de détection de mouvement relatif selon l'une quelconque des revendications précédentes, dans lequel ledit aimant (401) est un électroaimant.

10. Appareil robotisé comprenant un dispositif de détection de mouvement relatif selon l'une quelconque des revendications précédentes.

11. Appareil robotisé selon la revendication 10, comprenant une manette (201) définissant ledit premier élément, ladite manette comprenant un pilier (203) relié de manière souple, au niveau d'une extrémité proximale, audit premier élément dudit appareil robotisé et relié de manière souple, au niveau d'une extrémité distale, audit second élément dudit appareil robotisé au moyen d'un siège et d'une douille (212).

12. Appareil robotisé selon la revendication 11, ne contenant pas plus d'une manette (201).

13. Appareil robotisé selon la revendication 10, dans lequel ledit dispositif robotisé est une tondeuse à gazon robotisée.
